# EUROPEAN PATENT APPLICATION

(11) **EP 4 746 001 A1**
(43) Date of publication of application: **20.05.2026**
(21) Application number: 25215114.7
(22) Date of filing: 12.11.2025
(51) Int. Cl.: H01B 5/10, D07B 1/14, G01L 1/24, G01M 5/00, H01B 7/32, H01B 9/00, H02G 7/00

(54) **A CONDUCTOR FOR OVERHEAD POWER LINES**

(30) Priority: 13.11.2024 IT 202400025602
(71) Applicant: De Angeli Prodotti Srl, 35023 Bagnoli di Sopra (PD) (IT)
(72) Inventor: PERONI, Davide, 35023 Bagnoli di Sopra (PD) (IT); CASOTTO, Mattia, 35023 Bagnoli di Sopra (PD) (IT); MORA, Luca, 35023 Bagnoli di Sopra (PD) (IT)
(74) Representative: Metroconsult Srl

(57) **Abstract**

A conductor (200) for overhead power lines, comprising: at least one electrically conductive skirt (210, 220); an aluminum tube (230), radially internal to said at least one conductive skirt (210, 220); a load-bearing core (240) of carbon fibre, radially internal to said aluminum tube (230); a sensor element (270), comprising: a metal tube (280), radially internal to said load-bearing core (240), and one or more optical fibres (250), radially internal to said metal tube (280).

## Description

### Field of the invention

The present invention relates in general to the field of conductors for overhead power lines, preferably, bare conductors for overhead power lines. Even more particularly, the present invention relates to a conductor for overhead power lines comprising a sensor element which, coupled to a monitoring system, allows for continuous and real-time control of the state of the power line.

### Description of the prior art

As is known, conductors used in overhead power lines are passive components, their sole function being the transport of electrical energy.

The Applicant observes that monitoring the operating conditions of a power line is of fundamental importance. Currently, the behaviour of a conductor is in fact studied and modelled by means of software, based on operating conditions dictated by regulations specific to the region where the conductor will be installed. In general, these regulations are valid at a national level and group together various relevant areas, reporting standard values based on meteorological and seasonal conditions on a statistical basis.

Since these are parameters identified on a statistical basis, very broad precautionary limits must be considered in order to always operate in safe conditions, to the detriment of the optimisation of the line itself.

As is known, in order to obtain more reliable and precise data, point sensors are installed directly on the conductor. Such point sensors are suitable for providing information on the operating conditions of the conductor itself. Disadvantageously, it is impossible to have global information of the entire line since the sensors provide results exclusively pertinent to a surrounding of their point of application.

Even more disadvantageously, such sensors are difficult to install; in fact, having to be installed manually, not all sites of interest may be suitable for the use of these sensors.

Also known are solutions in which the conductor is provided with one or more optical fibres, aimed at controlling the conditions of the conductor itself.

Such optical fibres can be positioned between the load-bearing core and an extruded aluminum tube, radially external to the load-bearing core itself. This solution is described in patent application WO 2021/181265, in the name of the same Applicant.

In a different solution, the optical fibres are arranged to replace one of the electrical wires that make up the conductive skirt (or one of the conductive skirts) of the conductor. This implementation is described, for example, in patent application EP 4 303 889, in the name of the same Applicant.

Also known are solutions in which the conductor is provided with a load-bearing core formed by multiple composite elements made of heat-resistant carbon fibre stranded together. This core is protected by a tape and an extruded aluminum tube that makes it unassailable by external agents.

The document EP 4 411 324 describes a multisensing cable for overhead electrical transmission lines.

### Brief description of the invention

It is an object of the present invention to provide a conductor, in particular for overhead power lines.

In accordance with a first aspect, the invention relates to a conductor for overhead power lines.

Preferably, said conductor comprises at least one electrically conductive skirt.

Preferably, said conductor comprises an aluminum tube.

Preferably, said aluminum tube is radially internal with respect to said at least one conductive skirt.

Preferably, said conductor comprises a load-bearing core.

Preferably, said load-bearing core is made of composite material.

Preferably, said load-bearing core is radially internal with respect to said aluminum tube.

Preferably, said conductor comprises a sensor element.

Preferably, said sensor element comprises a metal tube.

Preferably, said metal tube is radially internal to said load-bearing core. Preferably, said sensor element comprises one or more optical fibres.

Preferably, said one or more optical fibres are radially internal to said metal tube.

The Applicant observes that document WO 2021/181265 describes a conductor with a load-bearing core made of composite material and two or more optical fibres arranged longitudinally on the outer surface of the core itself. This solution allows for monitoring of the core during the installation phases of the conductor in the line spans, but does not allow for monitoring following installation by means of anchoring clamps. The optical fibres, in fact, being on the outer surface of the core, are exposed and not protected from the stresses resulting from the installation of the clamps, with consequent damage to the optical fibres themselves.

The present invention, on the other hand, refers to a conductor with a composite material core provided, internally, with a metal tube containing optical fibres, which allows monitoring both during the installation of the conductor and after installation with anchoring clamps. The optical fibres, being inside a metal tube in a central position of the core, are protected during the installation phases of the anchoring clamps.

The Applicant observes that document EP 4 411 324 presents a solution applicable to standard conductors, such as OPPC and OPGW. The optical elements allow monitoring of standard conductors made of wires of traditional material such as steel and aluminum.

The present invention, on the contrary, describes a special conductor and not a standard conductor. Specifically, a load-bearing core made of carbon fibre composite material is provided for special applications, such as: use at higher temperatures (up to 200°C compared to 80°C for a traditional conductor), use in special applications where contained sags are desired, etc. As mentioned, the sensor element is placed inside the composite material core in direct contact with the composite material.

The sensor element allows monitoring of both the core and the complete conductor. The main objective of the monitoring is a detailed measurement of the composite material core. The optical fibre is therefore integrated inside the core and the proposed solution solves the problem of the fibre's survival, particularly after the installation of the anchoring clamps. The reason for monitoring the composite material core lies in the fact that the composite material has peculiar criticalities compared to traditional materials such as steel and aluminum. The composite material has greater fragility, particularly if subjected to longitudinal compression stresses. It is therefore important to monitor the core not only during the installation phases but also during the life of the conductor itself. The present invention therefore proposes itself as a solution to the problem of the survival of the optical fibres following the installation of the anchoring clamps, and as a solution for distributed monitoring of the core and the conductor during normal use on the line.

In addition to the above, the Applicant observes that document EP 4 303 889 presents a solution in which the optical fibres are positioned on the external skirts of the (traditional type) conductor; in this way, monitoring of the conductor in its entirety is performed, without it being possible, however, to have targeted monitoring of the composite material core.

In accordance with a second aspect, the invention relates to an overhead power line.

Preferably, said overhead power line comprises at least two pylons.

Preferably, said overhead power line comprises a conductor according to the aforementioned first aspect, suspended between said two pylons.

In accordance with a third aspect, the invention relates to a method for installing a conductor in an overhead power line.

Preferably, said method comprises providing a conductor in accordance with the aforementioned first aspect.

Preferably, said method comprises providing a clamp.

Preferably, said method comprises coupling the conductor to the clamp, so that the optical fibres exit from an opening of said clamp.

Preferably, said method further comprises anchoring the clamp to a pylon of said overhead power line.

In accordance with one or more of the above aspects, the invention may comprise one or more of the preferred features that follow.

Preferably, said at least one conductive skirt comprises a radially internal conductive skirt.

Preferably, said at least one conductive skirt comprises a radially external conductive skirt.

Preferably, said aluminum tube is radially internal with respect to said radially internal conductive skirt.

Preferably, said aluminum tube is substantially concentric with respect to said at least one conductive skirt.

Preferably, said load-bearing core is substantially concentric with respect to said aluminum tube.

Preferably, said load-bearing core comprises a plurality of mutually stranded elongate elements.

Preferably, each of said elongate elements, in cross-section, preferably has a circular or trapezoidal profile.

Preferably, said sensor element comprises a filling material arranged inside said metal tube.

Preferably, said filling material preferably comprises hydrophobic, and preferably thixotropic, gels or polymeric material.

Preferably, said filling material has a density ranging between 0.8 g/cm³ and 2 g/cm³.

Preferably, said filling material has a hardness ranging between 0 and 80 Shore A.

Preferably, said conductor comprises a first anti-galvanic corrosion layer comprised between the load-bearing core and the aluminum tube.

Preferably, said conductor comprises a second anti-galvanic corrosion layer comprised between the metal tube and the load-bearing core.

Preferably, said composite material comprises carbon fibre and/or glass fibre.

Preferably, said power line comprises at least one optical interrogator.

Preferably, said optical interrogator is connected to at least one of said one or more optical fibres.

Preferably, said optical interrogator is configured to detect operating conditions of said conductor.

Preferably, said one or more optical fibres comprise at least two optical fibres.

Preferably, said power line comprises at least two optical interrogators of different types.

Preferably, each optical interrogator is connected to a respective optical fibre.

Preferably, said clamp comprises a core clamp.

Preferably, said clamp comprises a sleeve.

Preferably, said core clamp has a housing portion.

Preferably, said core clamp has an anchoring portion.

Preferably, the housing portion has a pass-through internal longitudinal cavity.

Preferably, the opening is formed in the anchoring portion.

Preferably, the opening is contiguous to said internal longitudinal cavity.

Preferably, coupling the conductor to the clamp comprises coupling the conductor to the core clamp, so that a terminal tract of the conductor is inserted into the internal longitudinal cavity of the housing portion.

Preferably, said one or more optical fibres pass through the opening.

Preferably, said method comprises exerting a radial compression on the housing portion of the core clamp, so as to anchor said terminal tract of the conductor to the core clamp.

Preferably, following said coupling step, the terminal tract of the conductor occupies said internal longitudinal cavity.

Preferably, said method comprises removing, from a part of the conductor, said one or more conductive skirts.

Preferably, said one or more conductive skirts are removed from said part of the conductor before coupling the conductor to the core clamp.

Preferably, said method comprises removing, from a subpart of the conductor belonging to said part, the aluminum tube.

Preferably, said method comprises removing, from a subpart of the conductor belonging to said part, the load-bearing core.

Preferably, said method comprises removing the metal tube from said subpart, so as to expose said one or more optical fibres.

Preferably, the metal tube is removed from said subpart after coupling the conductor to the core clamp.

Preferably, said method comprises fitting the sleeve over said conductor.

Preferably, the sleeve is fitted over said conductor before coupling said conductor to said core clamp.

Preferably, said method comprises sliding said sleeve along said conductor so as to cover the housing portion of the core clamp and a part of the conductor extending from the housing portion.

Preferably, said sleeve is slid along said conductor after the coupling between said conductor and said core clamp.

Preferably, said method comprises exerting a radial compression on the sleeve to reinforce the constraint between the conductor and the core clamp.

Preferably, said method comprises removing, from a part of the conductor protruding from said clamp, said one or more conductive skirts.

Preferably, said method comprises removing, from a part of the conductor protruding from said clamp, said aluminum tube.

Preferably, said method comprises removing, from a part of the conductor protruding from said clamp, said load-bearing core.

Preferably, said method comprises removing, from a part of the conductor protruding from said clamp, said metal tube.

Preferably, by removing from said part of the conductor protruding from said clamp said one or more conductive skirts, said aluminum tube, said load-bearing core and said metal tube, said one or more optical fibres are exposed.

### Brief description of the drawings

The invention will become clearer from the following detailed description, provided purely by way of non-limiting example and to be read with reference to the accompanying drawings, in which:
- figure 1 is a schematic example of an overhead power line suspended between two pylons;
- figure 2 is a schematic example showing the connection between a conductor and a pylon;
- figure 3 schematically shows a perspective view of an embodiment of a conductor according to the present invention;
- figure 4 schematically shows a cross-sectional view of the conductor of figure 3;
- figure 5 shows a variant embodiment of a part of the conductor of figure 4;
- figure 6 schematically shows a cross-sectional view of an alternative embodiment to that of figure 4;
- figure 7 schematically shows a cross-sectional view of a further alternative embodiment to that of figure 4;
- figure 8 schematically shows a longitudinal sectional view of a clamp that can be used in the context of the present invention.

The Applicant observes that the figures are not necessarily to scale.

### Detailed description of preferred embodiments of the invention

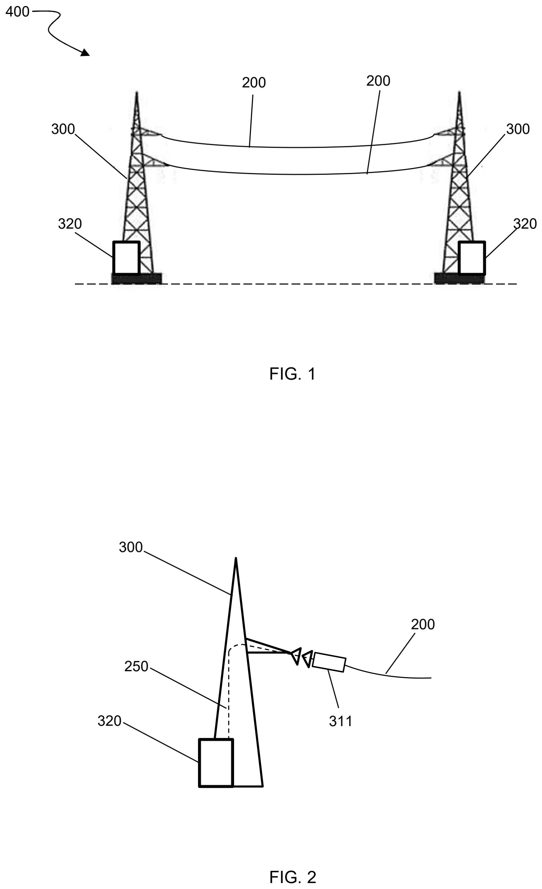

With initial reference to figure 1, the present invention provides a conductor 200 for an overhead power line 400. For example, said overhead power line 400 is a high-voltage overhead power line, preferably bare.

Preferably, the conductor 200 comprises at least one electrically conductive skirt 210, 220.

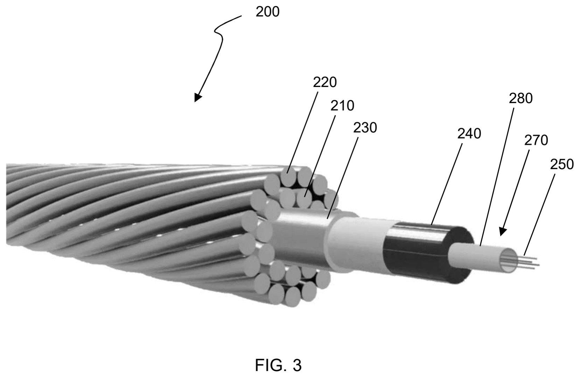

For example, the conductor 200 may comprise a radially internal conductive skirt 210 and a radially external conductive skirt 220 (figures 3-4).

The Applicant observes that the number of conductive skirts can be equal to 1, 2 or even more, depending on the desired characteristics for the conductor and the specific applications.

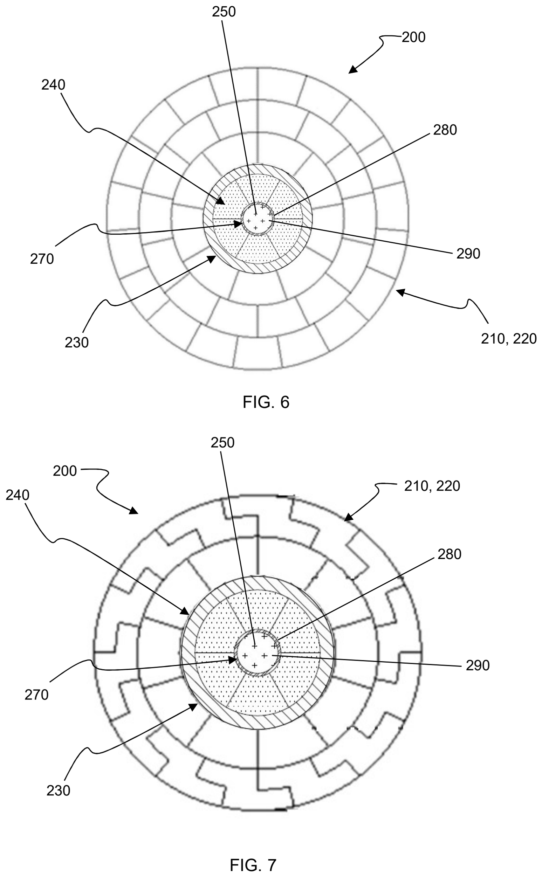

Each conductive skirt 210, 220 is made with a plurality of mutually stranded wires. The wires of each skirt preferably have the same cross-sectional shape. This shape can be, for example: circular (figures 3-4); trapezoidal, with a larger base and a smaller curved base (figure 6); with a "Z" profile (figure 7). It should be noted that other shapes are not excluded.

The Applicant observes that the shape and dimensions of the cross-section of the conductive wires are chosen according to the desired filling factor.

In the case of conductive wires with a circular profile, they can have, for example, a diameter between 2 and 6 mm.

Preferably, the conductive wires forming a respective conductive skirt 210, 220 are substantially identical to each other.

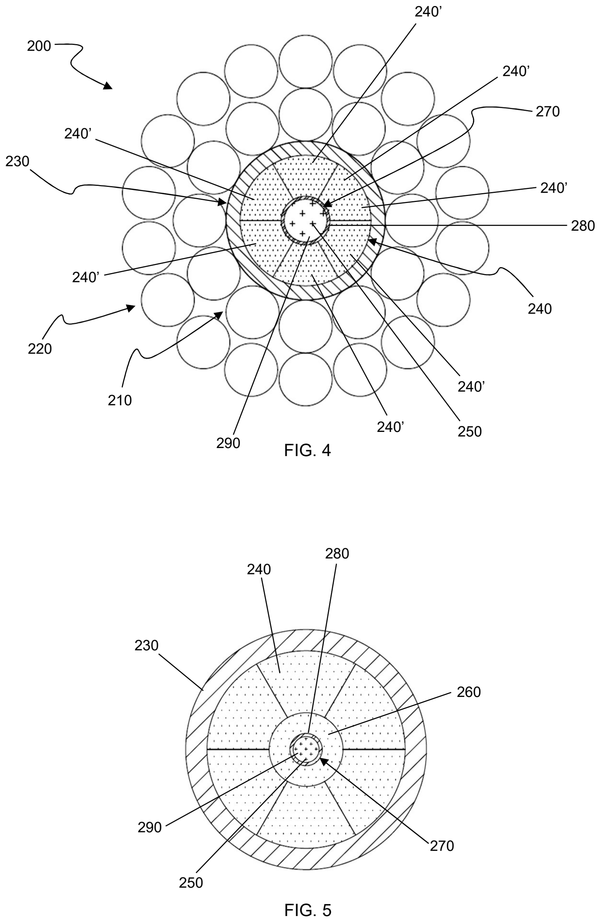

In one embodiment, the conductive wires of the conductive skirts 210, 220 have substantially the same shape and the same dimensions. In this regard, see for example figure 4.

Each conductive wire is made of a metallic material, for example, hard-drawn or annealed aluminum or other aluminum alloys.

For example, the at least one electrically conductive skirt 210, 220 can be made of Thermal Aluminum Alloy (Al-Zr).

Preferably, the overall diameter of the conductor 200, i.e., the diameter given by the outermost skirt 220 of the conductor 200, is between 10mm and 100mm.

The conductor 200 also comprises an aluminum tube 230.

The aluminum tube 230 is radially internal with respect to the at least one conductive skirt 210, 220; in particular, the aluminum tube 230 can be radially internal with respect to the radially internal conductive skirt 210.

The aluminum tube 230 is substantially concentric with respect to the at least one conductive skirt 210, 220.

The conductor 200 also comprises a load-bearing core 240.

The load-bearing core 240 is radially internal with respect to the aluminum tube 230.

The load-bearing core 240 is substantially concentric with respect to the aluminum tube 230.

In practical terms, the conductor 200 is a conductor with stranded wires in concentric layers.

The load-bearing core 240 is made of composite material, preferably containing carbon fibre and/or glass fibre.

In particular, the load-bearing core 240 comprises a plurality of mutually stranded elongate elements 240'.

Each of these elongate elements 240', in cross-section, can have a circular or trapezoidal profile. Figures 4-7 show, by way of example only, elongate elements 240' with a trapezoidal profile.

In accordance with the invention, the conductor 200 comprises a sensor element 270.

The sensor element 270 comprises a metal tube 280, radially internal to the load-bearing core 240.

The metal tube 280 extends substantially along the entire longitudinal development of the load-bearing core 240.

The metal tube 280 can be made, for example, of stainless steel and/or aluminum and/or other metal alloys.

The metal tube 280 can have an outer diameter preferably between 1mm and 5mm.

The thickness of the cylindrical wall defining the metal tube 280 can be between 0.1mm and 0.3mm.

Inside the metal tube 280, one or more optical fibres 250 are arranged.

Said one or more optical fibres 250 are radially internal with respect to the metal tube 280.

In practice, the optical fibres 250 are arranged according to a *Fiber in Metal Tube,* FIMT, technology.

For example, a number of optical fibres between 2 and 24 can be provided.

Preferably, the at least one optical fibre 250 is an optical fibre selected from the known types G.651, G.652, G.653, G.654, G.655, G.656, G.657.

In one embodiment, there is no filling material inside the metal tube 280.

In a different embodiment, a filling material is present inside the metal tube 280, in which the optical fibres 250 are embedded. Such filling material may comprise, for example, hydrophobic and preferably thixotropic gels, or polymeric material, having a density between 0.8 g/cm³ and 2 g/cm³, and a hardness between 0 and 80 Shore A.

Preferably, the conductor 200 comprises a first anti-galvanic corrosion layer 235; the first anti-galvanic corrosion layer 235, for example, can be made of polymeric material, in particular of aramidic material. The first anti-galvanic corrosion layer 235 is comprised between the load-bearing core 240 and the aluminum tube 230. This first anti-galvanic corrosion layer 235 can be made, for example, as a tape, wound around the load-bearing core 240.

Preferably, the conductor 200 comprising a second anti-galvanic corrosion layer comprised between the metal tube 280 and the load-bearing core 240. This second anti-galvanic corrosion layer can be made, for example, of polymeric material, in particular of aramidic material.

This second anti-galvanic corrosion layer can be made, for example, as a tape, wound around the metal tube inside which the optical fibres 250 are housed. In other embodiments, this second anti-galvanic corrosion layer can be extruded or applied by painting.

In one embodiment, schematically shown in figure 5, a layer 260 of pultruded carbon fibre composite material is present externally to the optical fibres 250. The thickness of the layer 260 can be, for example, between 0.5mm and 5mm.

As mentioned, in the schematic representation of figure 1, the conductor 200 is suspended between two pylons 300 of an overhead power line 400, which is preferably a bare overhead power line.

Advantageously, one or more of the pylons 300 is equipped with an optical interrogator 320.

This optical interrogator 320 is connected to at least one of the optical fibres 250, so as to detect the operating conditions of the conductor 200.

In one embodiment, the power line 400 comprises at least two optical interrogators 320, of different types; each optical interrogator can be connected to a respective optical fibre.

As shown in figure 2, one end of at least one optical fibre 250 of the conductor 200 is coupled to an optical interrogator 320.

The optical interrogator 320 is configured to detect the operating conditions of said conductor 200 by means of the at least one optical fibre 250.

For example, in order to detect the operating conditions of the conductor 200, the optical interrogator 320 is an optical interrogator of the Brillouin, or Rayleigh, or Raman, or polarization, or frequency analysis, or acousto-optic type.

The Applicant observes that the above-mentioned optical interrogators are known and will not be described in detail below.

At a general level, the Applicant observes that the at least one optical interrogator 320 is an instrument used to measure and analyse physical parameters of the conductor 200 through the use of optical technologies. In the optical fibres 250, a light radiation with a determined wavelength is propagated. The conditions in which the optical fibres 250 are found (which are directly correlated to the conditions of the conductor 200), such as for example temperature, deformations, etc., influence the optical behaviour of the fibres 250 themselves, causing variations in the intensity and/or wavelength and/or phase of the transmitted/reflected radiation. Therefore, the interrogator 320, by detecting the transmitted/reflected radiation from the optical fibres 250, and on the basis of preset reference parameters, is able to provide useful information related to the conditions of the conductor 200. For example, the reference parameters can be representative of ideal conditions for the propagation of light within the optical fibres 250. By comparing these reference parameters with the data detected via the reflected/transmitted light, it is possible to determine the operating conditions of the conductor 200.

As schematically shown in figure 2, a respective end of the conductor 200 is engaged to a respective pylon 300 by means of a clamp 311. The optical fibres 250 exit from the end of the conductor 200 and are guided to the optical interrogator 320.

The cooperation between optical fibres 250 and optical interrogator 320 is able to provide information on the operating conditions of the conductor 200, and in particular the operating conditions of the conductor 200 along its entire length; for example, such information may be one or more of:
- the operating temperature;
- the deformations undergone by the conductor 200;
- *"failure detection",* i.e., the targeted identification of a point where the conductor 200 is damaged or broken;
- vibrations to which the conductor is subjected (e.g., *"galloping"* phenomena and/or noise caused by the so-called *"corona effect"*)*.*

The use of a monitoring system (formed by the optical fibres 250 and the at least one optical interrogator 320) coupled with the conductor 200 allows setting safety limits based on the real operating conditions, also allowing to better exploit the potential of the conductor 200 itself, while still guaranteeing the safety of the line.

Advantageously, the monitoring system coupled with the conductor 200 allows determining with precision the position of faults, hot spots and, in general, all points that require or may require maintenance interventions, guaranteeing the immediacy of the intervention.

Once the power line 400 is connected to the optical interrogator 320 and is in operation, the data regarding the operating conditions of the line itself are available in real time, thus immediately accessible.

For example:
- the deformation measurements allow to identify with extreme precision the position of mechanical overloads (e.g., a fallen tree on the line, ice sleeves, etc.) and to carry out timely maintenance interventions;
- the interruption of the optical link (i.e., the breakage of the optical fibre 250) allows to identify with extreme precision the breaking point of the conductor 200, guaranteeing the reduction of the power line's out-of-service times.

The Applicant observes that, considering the wide operating ranges of the currently available optical instrumentation, in most cases it is possible to install the optical interrogator 320 inside the pylons 300 with extreme logistical-operational advantages.

For example, obtaining the information collected by means of the optical interrogator 320 directly at the pylon 300 entails the immediacy of their transfer to the control centres without problems of unstable connections.

From the point of view of the installation of the conductor 200 and, more generally, of the line 400, the Applicant observes that the method described below can be advantageously performed.

A pylon 300 and a clamp 311 are initially provided.

In one embodiment, the clamp 311 can be a compression clamp. In other embodiments, the use of wedge clamps or preformed clamps is envisaged. For illustrative purposes only, the case of a compression clamp is described below. In the case of wedge clamps or preformed clamps, they do not natively present obstacles to a rear exit of the free end of the conductor; they can therefore be considered natively provided with an "opening" through which the free end of the conductor (or a part of it, for example consisting of the sensor element 270 or only the optical fibres 250) can be made accessible. In the case of a compression clamp, as will be clearer below, the latter provides an opening 530, from which the optical fibres 250 can be passed for connection to an optical interrogator or to other optical fibre sections. In the present context, unless otherwise specified, "opening" refers both to the opening 530 of the compression clamp described below, and to a generic rear opening of any other clamp suitable for use in the present context.

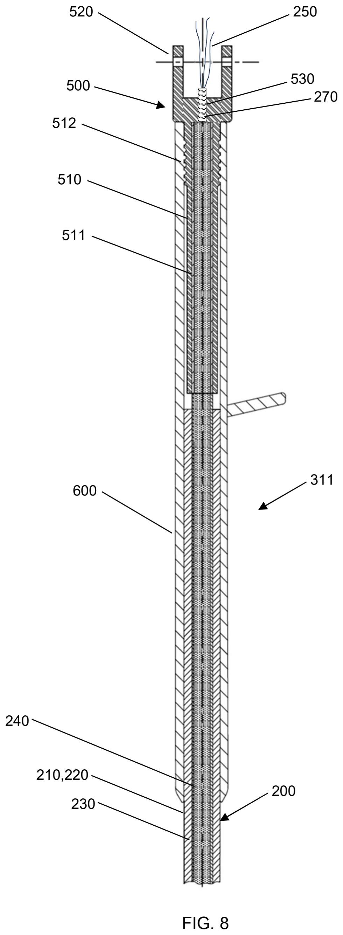

In the case of a compression clamp, the clamp 311 comprises a core clamp 500 and a sleeve 600 (figure 8).

The core clamp 500 has a housing portion 510 and an anchoring portion 520.

The housing portion 510 has a pass-through internal longitudinal cavity 511.

The housing portion 510 has the task of housing a part (an end) of the conductor 200.

The anchoring portion 520 has the function of allowing anchoring to the pylon 300.

As schematically shown in figure 8, the anchoring portion 520 has, in section, a substantially "C-shaped" conformation. The holes present in the anchoring portion 520 are shown aligned by way of example; however, these holes can also be offset. It should also be noted that different conformations are not excluded, such as for example a substantially plate-like portion, provided with an eyelet for coupling with the pylon 300.

The engagement portion 520 has an opening 530 contiguous to the aforementioned internal longitudinal cavity 511. The primary purpose of the opening 530 is to allow the sensor element 270, and in particular the optical fibres 250, to exit from the core clamp 500 so that they can be connected to one or more optical interrogators 320 and allow the planned control/monitoring operations to be carried out (or to be connected to further optical fibres associated with conductors suspended in other spans).

Initially, the sleeve 600 is fitted onto the conductor 200, so as to leave one end of the conductor 200 itself free, for a sufficient length for the operations described below.

Subsequently, said one or more conductive skirts 210, 220 are removed from a part of the conductor 200.

Furthermore, the aluminum tube 230 and the load-bearing core 240 are removed from a subpart of the conductor belonging to said part.

The aforementioned part of the conductor 200 is constituted by the free end of the conductor 200. In particular, the subpart is intended (as will be clearer below) to protrude rearward from the core clamp 500, through the opening 530, while the remaining part is intended to be housed in the housing portion 510, thus contributing to the constraint between the conductor 200 and the clamp 311.

The free end of the conductor 200 is inserted into the internal longitudinal cavity 511 of the core clamp 500, so as to pass through it completely and allow at least the sensor element 270 (i.e., the aforementioned subpart) to exit from the opening 530.

Advantageously, it is provided that, after the insertion of the sensor element 270, the opening 530 is sealed, thus preventing the entry of water or other undesirable/harmful substances.

The end of the conductor 200 is then anchored, by means of radial compression, inside the internal longitudinal cavity 511 of the housing portion 510 of the core clamp 500.

Subsequently, the sleeve 600 is slid along the conductor 200, so as to be brought into correspondence with the core clamp 500, in a position radially external to a portion of the conductor 200 (i.e., the portion extending from the housing portion 510) and to the housing portion 510.

The sleeve 600 is preferably made of aluminum or aluminum alloy. This sleeve 600 has sufficient axial length to substantially cover the entire housing portion 510 of the core clamp 500, and a portion of the conductor 200. For example, the total axial length of the clamp 311 (formed by the core clamp 500 and the sleeve 600) can be, for example, between 0.5 m and 1.5 m.

The sleeve 600 has an internal diameter sufficient to be fitted externally both on the conductor 200 with all its components, and on the housing portion 510 of the core clamp 500. By means of radial compression, the sleeve 600 is fixed to the conductor 200 and the core clamp 500, performing both a function of protecting the conductor- core clamp junction, and a function of electrical connection between the skirt / skirts 210, 220 of the conductor 200 and the conductive part of the core clamp 500. The housing portion 510 is externally provided with an undulated part 512 (i.e., provided with so-called "knuckles"), which contributes to maintaining the constraint between said sleeve 600 and the core clamp 500.

Once the end of the conductor 200 is coupled to the clamp 311, the anchoring portion 520 of the core clamp 500 is anchored to the pylon 300, in a manner known per se.

In some embodiments, where for example wedge clamps or preformed clamps are used, the free end of the conductor 200 is initially made to exit from the rear opening of the clamp without previously removing any layer. After the conductor 200 has been firmly coupled to the clamp 311, from the tract of conductor that extends from the rear opening, the conductive skirts 210, 220, the aluminum tube 230, the possible aramidic material layer 235, the load-bearing core 240 and the metal tube 280 are removed, in order to expose the optical fibres 250. As mentioned, the optical fibres 250 can then be connected to the optical interrogator 320 or to other optical fibres, belonging to a conductor afferent to the same pylon.

## Claims

1. A conductor (200) for overhead power lines, comprising:
- at least one electrically conductive skirt (210, 220);
- an aluminum tube (230), radially internal to said at least one conductive skirt (210, 220);
- a load-bearing core (240) of composite material, radially internal to said aluminum tube (230);
- a sensor element (270) comprising:
a metal tube (280), radially internal to said load-bearing core (240);
one or more optical fibres (250), radially internal to said metal tube (280).

2. The conductor (200) according to claim 1, wherein said at least one conductive skirt comprises a radially internal conductive skirt (210) and a radially external conductive skirt (220), said aluminum tube (230) being radially internal to said radially internal conductive skirt (210),
wherein said aluminum tube (230) is substantially concentric to said at least one conductive skirt (210, 220)
wherein said load-bearing core (240) is substantially concentric to said aluminum tube (230).

3. The conductor (200) according to any one of the preceding claims, wherein said load-bearing core (240) comprises a plurality of mutually stranded elongate elements (240'),
wherein each one of said elongate elements (240'), in a cross-sectional view, preferably has a circular or trapezoidal profile.

4. The conductor (200) according to any one of the preceding claims, wherein said sensor element (270) also comprises a filling material (290) arranged within said metal tube (280), wherein said filling material preferably comprises hydrophobic, and preferably thixotropic, gels or polymeric material with a density ranging between 0.8 g/cm³ and 2 g/cm³ and a hardness ranging between 0 and 80 Shore A.

5. The conductor (200) according to any one of the preceding claims, comprising at least one of:
a first anti-galvanic corrosion layer (235) comprised between the load-bearing core (240) and the aluminum tube (230);
a second anti-galvanic corrosion layer comprised between the metal tube (280) and the load-bearing core (240).

6. The conductor (200) according to any one of the preceding claims, wherein said composite material comprises carbon fibre and/or glass fibre.

7. Overhead power line (400) comprising:
- at least two pylons (300);
- a conductor (200) according to any one of the preceding claims, suspended between said two pylons (300).

8. The power line according to claim 7, further comprising at least one optical interrogator (320) connected to at least one of said one or more optical fibres (250), said optical interrogator (320) being configured to detect operating conditions of said conductor (200).

9. The power line according to claim 7, wherein said one or more optical fibres (250) comprise at least two optical fibres, wherein said power line comprises at least two optical interrogators (320) of different types, each optical interrogator being connected to a respective optical fibre.

10. Method for installation of a conductor (200) in an overhead power line (400), comprising:
providing a conductor (200) according to any one of claims 1-6;
providing a clamp (311);
coupling the conductor (200) to the clamp (311), in such a way that the optical fibres (250) come out through an opening of said clamp (311);
anchoring the clamp (311) to a pylon (300) of said overhead power line (400).

11. Method according to claim 10, wherein said clamp (311) comprises a core clamp (500) and a sleeve (600); wherein said core clamp (500) has a housing portion (510) and an anchoring portion (520); wherein the housing portion (510) has a pass-through internal longitudinal cavity (511); wherein the opening (530) is formed in the anchoring portion (520) and is contiguous to said internal longitudinal cavity (511); wherein coupling the conductor (200) to the clamp (311) comprises:
coupling the conductor (200) to the core clamp (500), in such a way that a terminal tract of the conductor (200) is inserted in the internal longitudinal cavity (511) of the housing portion (510), and that said one or more optical fibres (250) come out through the opening (530);
wherein said method further comprises:
exerting radial compression on the housing portion (510) of the core clamp (500) in order to anchor said terminal tract of the conductor (200) to the core clamp (500).

12. Method according to claim 11, wherein, after said coupling step, the terminal tract of the conductor (200) occupies said internal longitudinal cavity (511).

13. Method according to any one of claims 10-12, further comprising:
before coupling the conductor (200) to the core clamp (500), removing from a part of conductor (200) said one or more conductive skirts (210, 220), and removing from a conductor subpart belonging to said part, the aluminum tube (230) and the load-bearing core (240);
after coupling the conductor (200) to the core clamp (500), removing the metal tube (280) from said subpart, so as to expose said one or more optical fibres (250).

14. Method according to any one of claims 10-12, further comprising:
before coupling said conductor (200) to said core clamp (500), fitting the sleeve (600) over said conductor (200);
after coupling said conductor (200) to said core clamp (500), sliding said sleeve (600) along said conductor so as to cover the housing portion (520) of the core clamp and a part of the conductor (200) extending from the housing portion (520);
exerting radial compression on the sleeve (600) to reinforce the constraint between the conductor (200) and the core clamp (500).

15. Method according to claim 10, further comprising:
removing from a part of conductor (200) protruding from the clamp (311) said one or more conductive skirts (210, 220), said aluminum tube (230), said load-bearing core (240) and said metal tube (280), so as to expose said one or more optical fibres (250).
